Europäisches Patentamt

European Patent Office

Office européen des brevets

(11) Numéro de publication: **0 272 953**
**A1**

## (12) DEMANDE DE BREVET EUROPEEN

(21) Numéro de dépôt: **87402561.2**

(22) Date de dépôt: **13.11.87**

(51) Int. Cl.⁴: **C 09 K 5/04**

(30) Priorité: **21.11.86 FR 8616363**

(43) Date de publication de la demande:
**29.06.88 Bulletin 88/26**

(84) Etats contractants désignés:
**AT BE CH DE GB IT LI LU NL SE**

(71) Demandeur: **INSTITUT FRANCAIS DU PETROLE**
**4, Avenue de Bois-Préau**
**F-92502 Rueil-Malmaison (FR)**

(72) Inventeur: **Ambrosino, Jean-Louis**
**41, rue Henri Richaume**
**F-78360 Montesson (FR)**

**Cohen, Choua**
**6, Cours Lafayette**
**F-69003 Lyon (FR)**

**Cheron, Jacques**
**76 bis, rue du Maréchal Foch**
**F-78600 Maisons Laffitte (FR)**

**Rojey, Alexandre**
**29-33, rue Henri Regnault**
**F-92380 Garches (FR)**

(54) **Mélanges de fluides de travail utilisables dans les cycles thermodynamiques à compression comprenant du trifluorométhane et du chlorodifluoroéthane.**

(57) L'invention concerne des mèlanges non-azéotropiques de fluides utilisables dans les cycles thermodynamiques à compression, par exemple dans les pompes à chaleur, comprenant du R23, du R142b et éventuellement un fluide (c) autre que le R23 ou le R142b choisi dans le groupe formé par les composés halogénés du méthane et de l'éthane ayant un point d'ébullition de -85 à +60 °C, dans des proportions molaires telles que le rapport molaire R23/R142b soit de 0,01:1 à 1,10:1 et le rapport molaire (R23 + R142b)/(R23 + R142b + c) soit de 0,26:1 à 1:1.

Les mélanges de l'invention sont utilisables comme fluide de travail pour les pompes à chaleur dont le fluide circule dans un évaporateur (E1), un compresseur (K1), un condenseur (E2) et un détendeur (D1). Les échanges thermiques se font avec les fluides extérieurs (5,6) et (7,8) respectivement.

Les mélanges de l'invention permettent de fournir de la chaleur au condenseur à une température de +50 à +100 °C tout en ayant une pression interne généralement limitée à 0,3 MPa.

FIG.1

FIG.2

EP 0 272 953 A1

## Description

L'invention est relative à des mélanges de fluides pour pompes à chaleur et à un procédé de chauffage et/ou conditionnement thermique d'un local au moyen d'une pompe à chaleur à compression utilisant des fluides mixtes de travail.

L'utilisation de mélanges de fluides non-azéotropiques dans un cycle thermodynamique à compression, et par exemple dans une pompe à chaleur, en vue de l'amélioration du coefficient de performance de ladite pompe à chaleur, a fait l'objet de demandes de brevets français antérieurs : (FR-A-2 337 855, FR-A-2 474 151, FR-A-2 474 666 et FR-A-2 497 931).

En particulier, la demande de brevet publiée FR-A-2 474 151 décrit des mélanges non-azéotropiques de deux constituants permettent d'augmenter les performances d'une pompe à chaleur et donc de réduire les coûts d'exploitation de ladite pompe à chaleur. Les mélanges à deux constituants ainsi décrits ne permettent toutefois pas d'accroître la puissance thermique pour un compresseur donné.

Le but de la présente invention est de proposer des mélanges spécifiques de fluides permettent d'augmenter la puissance thermique et/ou le coefficient de performance délivrés par une pompe à chaleur. En employant dans une pompe à chaleur les mélanges de fluides proposés par l'invention, il est ainsi possible de réduire le coût d'investissement et le coût d'exploitation. En effet, les fluides mixtes de travail selon l'invention autorisent un accroissement de la capacité thermique d'une pompe à chaleur donnée, sans modification des composants de ladite pompe à chaleur, en particulier sans modification du compresseur, et autorisent également un accroissement du coefficient de performance.

Il existe deux moyens classiques d'accroître la puissance thermique délivrée par une pompe à chaleur ; un premier moyen est d'équiper celle-ci d'un compresseur de plus grande capacité, qui permet d'aspirer un débit volumique plus important, mais cette solution conduit à un surinvestissement. L'autre moyen d'augmenter la capacité thermique d'une pompe à chaleur consiste à utiliser un fluide de travail dont le point d'ébullition est plus bas que celui du fluide usuel. En tout état de cause, une telle substitution conduit à une dégradation du coefficient de performance et aussi à une gamme plus restreinte des applications de la machine, étant donné que la température critique du fluide à point d'ébullition plus bas est généralement plus faible.

Le principe de l'invention consiste à sélectionner un mélange non-azéotropique spécifique de fluides, ledit mélange étant caractérisé par le fait qu'il comprend :

alpha) du trifluorométhane (R23) : fluide (a)

béta) du chloro-1 difluoro-1,1 éthane (R142b) : fluide (b) et

gamma) éventuellement au moins un fluide (c) choisi dans le groupe formé par les composés halogénés du méthane et de l'éthane, autres que le R23 et le R142b, ayant un point d'ébullition, sous pression atmosphérique, d'environ -85 à environ +60 °C et de préférence d'environ -60 à environ +50 °C, les proportions molaires des fluides (a), (b) et (c), dans le mélange non-azéotropique de fluides, étant telles que le rapport molaire a/b soit de 0,01:1 à 1,10:1 et de préférence de 0,05:1 à 1,10:1 et d'une manière la plus préférée de 0,07:1 à 1,10:1 et le rapport molaire (a+b)/(a+b+c) soit de 0,26:1 à 1:1.

Dans une forme avantageuse de l'invention on emploie un mélange contenant au moins un fluide (c), le rapport molaire a/b restant dans les fourchettes définies ci-dessus, la quantité en mole du fluide (a) dans le mélange représentant de préférence au moins 1 % et la rapport molaire (a+b)/(a+b+c) étant alors habituellement de 0,26:1 à 0.70:1 et d'une manière préférée de 0,26:1 à 0,55:1.

De préférence le mélange consiste en un mélange de trois fluides distincts, le fluide (c) de ce mélange de trois fluides pouvant être également un mélange azéotropique se comportant comme un fluide unique.

Au sens de la présente invention on appelle composé halogéné du méthane et de l'éthane tous les dérivés de l'un ou l'autre de ces hydrocarbures comprenant au moins un halogène tel que le chlore, le fluor, le brome ou l'iode dans leur molécule. On préfère généralement employer des composés comprenant au moins un atome de fluor et éventuellement au moins un atome de chlore et ne comprenant pas d'atomes de brome et/ou d'iode dans leur molécule.

Parmi les fluides (c) on peut citer à titre d'exemples les composés suivants " le monochlorodifluorométhane (R22), le dichlorodifluorométhane (R12), le mélange azéotropique R500 constitué en poids de 73,8 % de R12 et de 26,2 % de difluoro-1,1 éthane (R152a) et le mélange azéotropique R502 constitué en poids de 48,8 % de R22 et de 51,2 % de chloropentafluoroéthane (R115).

Au sens de la présente invention on appelle mélange non-azéotropique, un mélange de fluides, comprenant au moins deux fluides distincts, dont la température de changement d'état liquide-vapeur à pression constante, n'est pas constante.

Dans le cycle d'une pompe à chaleur donnée pour des conditions de fonctionnement identiques, la pression d'évaporation d'un mélange du type précédent est supérieure, toutes choses égales par ailleurs à la pression d'évaporation du fluide ou des fluides, qui seraient utilisés sans le fluide (a).

En conséquence, le volume molaire des vapeurs aspirées au compresseur est plus faible, ce qui pour un compresseur de cylindrée donnée, augmente le débit molaire de fluide et donc la capacité thermique de la pompe à chaleur. Par ailleurs, l'utilisation d'un fluide mixte de travail comprenant au moins un fluide (c), du R142b et du R23 conduit en général à une augmentation du rendement volumétrique dans le cas des compresseurs alternatifs à pistons et est donc favorable également à une augmentation de la capacité thermique. L'augmentation du rendement volumétrique est d'autant plus élevée que la concentration molaire du fluide (a) est importante. La fraction molaire du fluide (a) (R23) devra être comprise dans les limites définies ci-dessus ; en effet une proportion trop importante entraîne une pression de condensation excessive.

En effet, les compresseurs ont un domaine d'application limité par certains paramètres de fonctionnement (température de refoulement et différence de pression maximales) et, en particulier, par la pression maximale de refoulement. La pression de condensation d'un mélange selon l'invention sera de préférence inférieure à 30 bar (0,3 MPa).

Les mélanges de fluides proposés par l'invention sont plus particulièrement utilisables lorsque la température de sortie du fluide externe circulant dans le condenseur est de préférence comprise entre +50 °C et +100 °C et ils permettemt de conserver dans ce cas une pression de condensation inférieure à 0,3 MPa alors que dans les mêmes conditions les fluides utilisés habituellement dans l'art antérieur conduisent à des pressions très largement supérieures, dépassant parfois 0,45 MPa ce qui ne permet plus d'utiliser les machines classiques.

Les pompes à chaleur, dans lesquelles les mélanges définis précédemment sont utilisables, peuvent être d'un type quelconque fonctionnant généralement avec une étape de condensation, une étape de détente, une étape d'évaporation et une étape de compression du mélange non-azéotropique utilisé comme fluide de travail. Le compresseur peut être, par exemple, un compresseur à pistons lubrifiés ou à pistons secs, un compresseur à vis ou un compresseur centrifuge. Les échangeurs peuvent être, par exemple, des échangeurs double-tube, des échangeurs à tube et calandre, des échangeurs à plaques ou des échangeurs à lamelles ou des échangeurs classique à ailettes pour un transfert thermique avec de l'air. On préfère un mode d'échange globalement à contre-courant : celui-ci est bien réalisé dans le cas des échangeurs coaxiaux utilisés pour les échanges eau/réfrigérant dans les pompes à chaleur de faible puissance. Il peut être réalisé de façon approchée dans les échangeurs air/réfrigérant selon un agencement décrit dans la demande de brevet français FR-A- 2 474 666. La puissance thermique délivrée peut varier, par exemple, entre quelques kilowatts et plusieurs mégawatts.

Un mode opératoire préféré est celui décrit dans la demande de brevet français FR-A-2 497 931.

Ce mode opératoire comprend les étapes suivantes : (a) on comprime le fluide mixte de travail en phase vapeur, (b) on met on contact d'échange thermique le fluide mixte comprimé provenant de l'étape (a) avec un fluide extérieur relativement froid et que l'on désire réchauffer, et l'on maintient ce contact jusqu'à condensation sensiblement complète dudit fluide mixte, (c) on met en contact d'échange thermique le fluide mixte sensiblement complètement condensé provenant de l'étape (b) avec un fluide de refroidissement défini à l'étape (f), de manière à refroidir davantage ledit fluide mixte, (d) on détend le fluide mixte refroidi provenant de l'étape (c), (e) on met le fluide mixte détendu, provenant de l'étape (d), en contact d'échange thermique avec un fluide extérieur qui constitue une source de chaleur, les conditions de contact permettant la vaporisation partielle dudit fluide mixte détendu, (f) on met le fluide mixte partiellement vaporisé, provenant de l'étape (e), en contact d'échange thermique avec le fluide mixte sensiblement complètement liquéfié envoyé à l'étape (c), ledit fluide mixte partiellement vaporisé constituant le fluide de refroidissement de ladite étape (c), les conditions de contact permettant de poursuivre la vaporisation commencée à l'étape (e), et (g) on renvoie le fluide mixte vaporisé, provenant de l'étape (f), à l'étape (a).

La figure 1 illustre schématiquement un arrangement classique d'une pompe à chaleur eau/eau dans laquelle les mélanges de la présente invention peuvent être employés ; elle sera décrite en détail ci-après en liaison avec l'exemple 1.

La figure 2 représente un autre arrangement de pompe à chaleur dans laquelle les mélanges selon l'invention peuvent être employés, elle sera décrite en détail, ci-après, en liaison avec l'exemple 2.

Les exemples suivants illustrent la mise en oeuvre des mélanges spécifiques de fluides selon l'invention.

## EXEMPLE 1

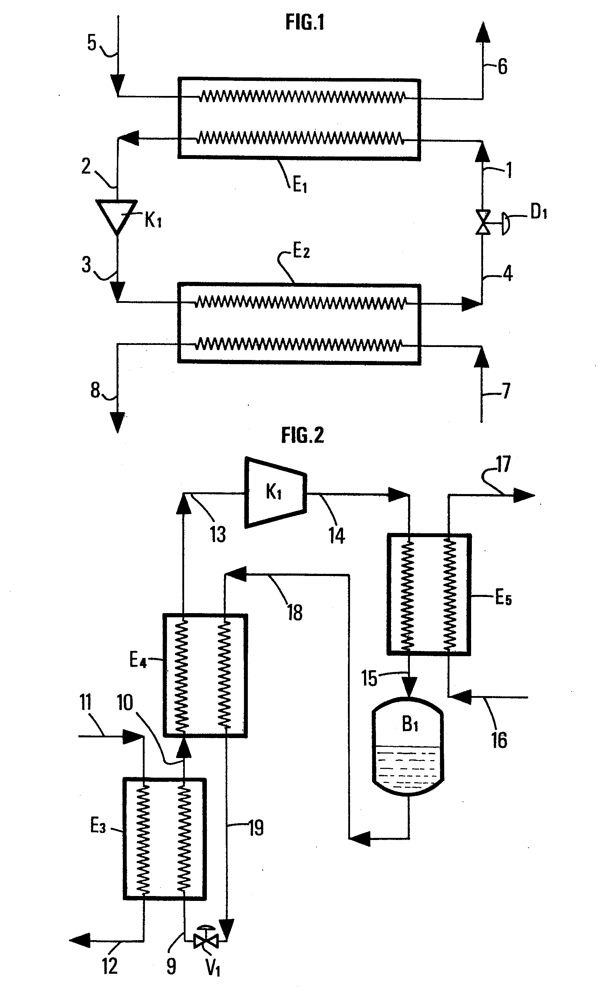

Le schéma de fonctionnement de la pompe à chaleur est représenté par la figure 1.

Le fluide mixte de travail, issu du détendeur par le conduit 1, est partiellement vaporisé dans l'évaporateur E1 par le refroidissement de l'eau de la source froide qui circule à contre-courant de fluide de travail et qui entre dans l'évaporateur E1 par le conduit 5 et en ressort par le conduit 6. Issu de l'évaporateur E1 par le conduit 2, le mélange de travail est entièrement vaporisé.

Le fluide mixte de travail à l'état gazeux est aspiré dans le compresseur K1 par le tuyau 2 et est refoulé à haute pression par le tuyau 3. Le fluide de travail est condensé dans le condenseur E2 dans lequel il pénètre par le conduit 3 et d'où il ressort à l'état de liquide par le conduit 4. Au cours de la condensation dans E2, le mélange cède la puissance thermique utile à l'eau du circuit extérieur qui, entre le tuyau d'arrivée 7 et le tuyau de sortie 8, circule à contre-courant du fluide de travail. Le mélange, une fois condensé dans E2, accède au détendeur D1 par le tuyau 4.

Les conditions de fonctionnement sont les suivantes : température d'entrée de l'eau au condenseur +58 °C, température de sortie de l'eau du condenseur +68 °C, température d'entrée de l'eau à l'évaporateur E1 +34,4 °C, température de sortie de l'eau de l'évaporateur E1 +29,6 °C. Les résultats obtenus sont donnés dans le tableau I ci-dessous. Le fluide mixte de travail est un mélange de R23 et R142b comprenant en mole 5 % de R23 et 95 % de R142b.

## TABLEAU I

| Fluide (fraction molaire) | $Q_{cond}$* | $Q\acute{e}vap$* | W* | COP* |
|---|---|---|---|---|
| R23(0,05)-R142b(0,95) | 6430 | 4750 | 1680 | 3,83 |

* $Q_{cond}$ : puissance thermique en watt délivrée au condenseur.

$Q\acute{e}vap$ : puissance thermique en watt prélevée à l'évaporateur.

W : puissance de compression en watt transmise au fluide de travail.

COP : rapport de la puissance thermique délivrée au condenseur à la puissance de compression transmise au fluide de travail.

<u>EXEMPLE 2</u>

Le schéma de fonctionnement de la pompe à chaleur est représenté par la figure 2.

Le fluide mixte de travail, issu du détendeur par le conduit 9, est partiellement vaporisé dans l'évaporateur E3 par le refroidissement de l'eau de la source froide qui circule à contre-courant du fluide de travail et qui entre dans l'évaporateur E3 par le conduit 11 et en ressort par le conduit 12. Issu de l'évaporateur E3 par le conduit 10, le mélange de travail est entièrement vaporisé et éventuellement surchauffé dans l'échangeur E4, par échange à contre-courant avec le condensat sous refroidi qui pénètre dans E4 par le tuyau 18 et qui est évacué par le tuyau 19.

Le fluide mixte de travail à l'état gazeux est aspiré dans le compresseur K1 par le tuyau 13 et est refoulé à haute pression par le tuyau 14. Ensuite, il est sous refroidi et totalement condensé dans le condenseur E5 dans lequel il pénètre par le conduit 14 et d'où il ressort à l'état de liquide saturé par le conduit 15. Au cours de la condensation dans E5, le mélange cède la puissance thermique utile à l'eau du circuit extérieur qui, entre le tuyau d'arrivée 16 et le tuyau de sortie 17, circule à contre-courant du fluide de travail. Le mélange, une fois condensé dans E5, pénètre par la conduite 15 dans le ballom de recette B1 et ressort par la conduite 18 ; il est ensuite sous refroidi dans l'échangeur E4 et accède au détendeur V1 par le tuyau 19.

Sur le plan de la capacité, ce schéma apporte une amélioration lorsque le fluide de travail est un mélange de fluides non-azéotropiques, car l'échangeur E4 où se réalise la fin de la vaporisation permet d'atteindre pour le mélange une température en fin d'ébullition plus élevée, donc une pression d'aspiration plus forte.

Les conditions de fonctionnement sont les suivantes :
- température d'entrée de l'eau au condenseur +40 °C,
- température de sortie de l'eau du condenseur +50 °C,
- température d'entrée de l'eau à l'évaporateur E3 +35 °C,
- température de sortie de l'eau de l'évaporateur E3 +27 °C.

Les résultats obtenus sont résumés dans le tableau 2 ci-dessous.

## TABLEAU II

| Fluide (fraction molaire) | $Q_{cond}*$ | $Q_{évap}*$ | $W*$ | $COP*$ | $P_{EC}*$ |
|---|---|---|---|---|---|
| R12 (comparatif) | 6830 | 5600 | 1230 | 5,55 | 0,128 |
| R23(0,14)-R142b(0,13) R22(0,73) | 12120 | 10080 | 2040 | 5,94 | 0,216 |
| R23(0,03)-R142b(0,20) R22(0,77) (comparatif) | 9800 | 8150 | 1650 | 5,94 | 0,169 |

$*P_{EC}$ : Pression entrée condenseur du fluide réfrigérant en MPa.

\* Les notations restent identiques à celles de l'exemple 1.

Dans le cas du mélange ternaire R23(0,14)-R142b(0,13)-R22(0,73) selon l'invention le gain de puissance thermique délivré au condenseur est de 77 % par rapport à l'emploi du R12, et d'environ 24 % par rapport à l'emploi d'un mélange ternaire R23-R142b-R22 non conforme à l'invention. Ce gain de puissance est accompagné d'une amélioration du coefficient de performance.

EXEMPLE 3

Le schéma de fonctionnement de la pompe à chaleur est représenté par la figure 1.

Le fluide mixte de travail, isssu de détendeur par le conduit 1, est partiellement vaporisé dans l'évaporateur E1 par le refroidissement de l'eau de la source froide qui circule à contre-courant de fluide de travail et qui entre dans l'évaporateur E1 par le conduit 5 et en ressort par le conduit 6. Issu de l'évaporateur E1 par le conduit 2, le mélange de travail est entièrement vaporisé.

Le fluide mixte de travail à l'état gazeux est aspiré dans le compresseur K1 par le tuyau 2 et est refoulé à haute pression par le tuyau 3. Le fluide de travail est condensé dans le condenseur E2 dans lequel il pénètre par le conduit 3 et d'où il ressort à l'état de liquide par le conduit 4. Au cours de la condensation dans E2, le mélange cède la puissance thermique utile à l'eau du circuit extérieur qui, entre le tuyau d'arrivée 7 et le tuyau de sortie 8, circule à contre-courant du fluide de travail. Le mélange, une fois condensé dans E2, accède au détendeur D1 par le tuyau 4.

Les conditions de fonctionnement sont les suivantes : température d'entrée de l'eau au condenseur +48 °C, température de sortie de l'eau de condenseur +58 °C, température d'entrée de l'eau à l'évaporateur E1 +45 °C, température de sortie de l'eau de l'évaporateur E1 +35 °C. Les résultats obtenus sont donnés dans le tableau III ci-après.

## TABLEAU III

| Fluide (fraction molaire) | $Q_{cond}$* | $Q_{évap}$* | W* | COP* | $P_{EC}$* |
|---|---|---|---|---|---|
| R23(0,03)-R142b(0,2425)-R22(0,7275) | 18690 | 15890 | 2800 | 6,68 | 0,197 |
| R142b(0,25)-R22(0,75) | 17760 | 15100 | 2660 | 6,68 | 0,187 |

\* Les notations restent identiques à celles des exemples 1 et 2.

EXEMPLE 4

D'autres mélanges, dont la composition est donnée ci-après en fraction molaire. ont été utilisés dans une pompe à chaleur du type eau/eau et ont fourni une puissance thermique importante. La pression interne dans la pompe à chaleur n'a pas dépassé 0,3 MPa.

a)  R23  0,1   mole    R142b  0,40 mole    R22    0,50 mole

b)  R23  0,08  mole    R142b  0,37 mole    R12    0,55 mole

c)  R23  0,1   mole    R142b  0,37 mole    R502   0,53 mole

d)  R23  0,15  mole    R142b  0,15 mole    R500   0,70 mole

e)  R23  0,05  mole    R142b  0,35 mole    R22    0,60 mole

f)  R23  0,03  mole    R142b  0,24 mole    R22    0,73 mole

g)  R23  0,02  mole    R142b  0,24 mole    R22    0,74 mole

Un intérêt particulier des mélanges non-azéotropiques selon l'invention est qu'ils permettent un fonctionnement des pompes à chaleur avec une pression interne limitée à 0,3 MPa (30 bar), même dans le cas de la fourniture de chaleur au condenseur à une température proche de 100 °C, par ajustement des compositions molaires des constituants. En effet si la relation pression température n'est pas modifiable pour un corps pur, il est tout à fait possible dans le cas de mélange de baisser la pression de condensation pour une température donnée.

**Revendications**

1) Mélange non-azéotropique de fluides utilisable dans les cycles thermodynamiques à compression, caractérisé en ce qu'il comprend :
alpha) du trifluorométhane (fluide (a)),
beta) du chloro-1 difluoro-1,1 éthane (fluide (b)) et
gamma) éventuellement au moins un fluide (c) différent du fluide (a) et du fluide (b) choisi dans le groupe formé par les composés halogénés du méthane et de l'éthane ayant une température d'ébullition sous pression atmosphérique d'environ -85 °C à environ +60 °C, les proportions molaires desdits fluides dans le mélange non-azéotropique étant telles que le rapport molaire a/b soit de 0,01:1 à 1,10:1 et le rapport molaire (a+b)/(a+b+c) soit de 0,26:1 à 1:1.

2) Mélange non-azéotropique selon la revendication 1, caractérisé en ce qu'il contient au moins un fluide (c) et en ce que les proportions molaires des fluides dans le mélange sont telles que le rapport molaire a/b soit de 0,05:1 à 1,10:1 et le rapport molaire (a+b)/(a+b+c) soit de 0,26:1 à 0,70:1.

3) Mélange non-azéotropique selon la revendication 2, dans lequel les proportions molaires des fluides sont telles que le rapport molaire a/b soit de 0,07:1 à 1,10:1 et le rapport molaire (a+b)/(a+b+c) soit de 0,26:1 à 0,55:1.

4) Mélange non-azéotropique selon l'une des revendications 1 à 3, dans lequel le fluide (c) est choisi dans le groupe formé par le R22, le R12, le R500 et le R502.

5) Procédé de chauffage et/ou de conditionnement thermique d'un local au moyen d'une pompe à chaleur à compression utilisant en tant que fluide de travail un mélange non-azéotropique de fluides selon l'une des revendications 1 à 4, ladite pompe à chaleur fonctionnant avec une étape de condensation, une étape de détente, une étape d'évaporation et une étape de compression dudit fluide de travail.

6) Procédé selon la revendication 5, dans lequel le fluide extérieur à chauffer, circulant dans le condenseur, à une température à la sortie du condenseur d'environ 50 à environ 100 °C.

7) Procédé selon la revendication 5 ou 6, dans lequel la pompe à chaleur opère dans des condition telles que (a) on comprime le fluide de travail en phase vapeur, (b) on met en contact d'échange thermique le fluide de travail comprimé provenant de l'étape (a) avec un fluide extérieur de refroidissement et l'on maintient ce contact jusqu'à condensation sensiblement comlète dudit fluide de travail, (c) on met en contact d'échange thermique le fluide de travail sensiblement complètement condensé provenant de l'étape (b) avec un fluide de refroidissement, défini à l'étape (f), de manière à refroidir davantage ledit fluide de travail, (d) on détend le fluide de travail refroidi provenant de l'étape (c), (e) on met le fluide de travail détendu provenant de l'étape (d), en contact d'échange thermique avec un fluide extérieur qui constitue une source de chaleur, les condition de contact permettant la vaporisation partielle dudit fluide de travail détendu, (f) on met le fluide de travail partiellement vaporisé, provenant de l'étape (e), en contact d'échange thermique avec le fluide de travail sensiblement complètement liquéfié envoyé à l'étape (c), ledit fluide de travail partiellement vaporisé constituant le fluide de refroidissement de ladite étape (c), les condition de contact permettant de poursuivre la vaporisation commencée à l'étape (e) et (g) on renvoie le fluide mixte vaporisé, provenant de l'étape (f) à l'étape (a).

8) Procédé selon l'une des revendication 5 à 7, dans lequel les échanges thermiques réalisés avec le ou les fluides extérieurs sont réalisés dans des échangeurs permettant un échange thermique selon un mode d'échange globalement à contre-courant.

9) Procédé selon l'une des revendications 5 à 8, dans lequel la composition du mélange non-azéotropique utilisé est choisie de manière à ce que la pression de condensation dudit mélange soit inférieure à 0,3 MPa.

PL_unique

0272953

**FIG.1**

**FIG.2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 514 875 (INSTITUT FRANCAIS DU PETROLE) <br> * Revendications 1,6,7 * <br> --- | 1,5,7,8 | C 09 K 5/04 |
| A | EP-A-0 081 395 (INSTITUT FRANCAIS DU PETROLE) <br> * Revendications 1,10 * <br> --- | 1,5,7 | |
| A | EP-A-0 066 439 (DAIKIN KOGYO) <br> * Revendications 1,3 * <br> ----- | 1 | |

DOMAINES TECHNIQUES RECHERCHES (Int. Cl.4)

C 09 K
F 25 B

Le présent rapport a été établi pour toutes les revendications

| Lieu de la recherche | Date d'achèvement de la recherche | Examinateur |
|---|---|---|
| LA HAYE | 11-01-1988 | NICOLAS H.J.F. |